# FASCICULE DE BREVET EUROPEEN

(11) **EP 2 297 938 B1**
(45) Date de publication et mention de la délivrance du brevet: **03.04.2013**
(21) Numéro de dépôt: 09766050.0
(22) Date de dépôt: 25.05.2009
(51) Int. Cl.: H04N 21/4623, H04N 21/266

(54) **CONTROLE D'ACCES A UN CONTENU AUDIOVISUEL PROTEGE**
ÜBERWACHUNG DES ZUGANGS ZU GESCHÜTZTEM AUDIOVISUELLEM INHALT
MONITORING ACCESS TO PROTECTED AUDIOVISUAL CONTENT

(30) Priorité: 27.05.2008 FR 0853451
(43) Date de publication de la demande: 23.03.2011
(73) Titulaire: France Télécom, 75015 Paris (FR)
(72) Inventeur: GUIONNET, Chantal, F-35510 Cesson Sevigne (FR); NOURRY, Pascal, F-35000 Rennes (FR)
(74) Mandataire: Cabinet Plasseraud
(86) Numéro de dépôt international: PCT/FR2009/050958
(87) Numéro de publication internationale: WO 2009/153488

(56) Documents cités:
- EP-A- 1 575 293
- EP-A- 1 742 475
- US-A1- 2007 150 960
- US-A1- 2007 286 422

## Description

L'invention se rapporte au domaine du contrôle d'accès à un contenu audiovisuel protégé.

Le contenu audiovisuel protégé peut par exemple être un contenu chiffré et diffusé, par exemple pour des applications de télévision à péage, ou bien encore un contenu accessible à la carte ou PPV (de l'anglais « Pay Per View »).

Le contrôle d'accès peut être effectué par le biais de messages d'inscription de droits et de messages de vérification de droits.

Un message d'inscription de droits, par exemple un message EMM (de l'anglais « Entitlement Management Message »), comprend typiquement des informations de mise à jour des droits d'un équipement et un moyen d'accès au contenu d'un message de vérification de droits. Ce moyen d'accès peut par exemple comprendre une clé d'exploitation, transmise sous forme chiffrée, et susceptible d'être déchiffrée à l'aide d'une clé stockée par cet équipement.

Un message de vérification de droits, par exemple un message ECM (de l'anglais « Entitlement Control Message »), comprend typiquement un critère d'accès et un moyen d'accès au contenu audiovisuel protégé. Ce moyen d'accès peut comprendre par exemple un mot de contrôle ou CW (de l'anglais « Control Word »), transmis sous forme encryptée.

L'équipement récepteur peut être configuré pour vérifier que les droits mémorisés et éventuellement mis à jour par un ou plusieurs messages d'inscription de droits reçus satisfont au critère d'accès du message de vérification de droits. Le cas échéant, le mot de contrôle CW est décrypté en utilisant la clé d'exploitation préalablement transmise par un message d'inscription de droits reçu. Ce mot de contrôle permet de déchiffrer le contenu audiovisuel protégé.

Le document US 2007/150960 divulgue un procédé de contrôle d'accès à un flux de données digitales qui a été encrypté au préalable.

Le document US2007/286422 divulgue un procédé pour fournir un accès conditionnel à des programmes multimédia.

Le document EP 1 575 293 divulgue un procédé de sécurisation d'un module de sécurité portable pour une utilisation avec un décodeur.

Il existe un besoin pour un contrôle d'accès plus élaboré.

Selon un premier aspect, l'invention a pour objet un procédé de contrôle d'accès à au moins un contenu audiovisuel protégé. Un message comprenant une pluralité d'au moins N messages de vérification de droits placés les uns à l'intérieur des autres et d'ordres respectifs i avec 1 ≤ *i* ≤ *N* est reçu, N étant supérieur ou égal à 2. Le message de vérification de droits d'ordre i<N contient un i^{ième} critère d'accès et le message de vérification de droits d'ordre i+1 sous forme encryptée. Le message de vérification de droits d'ordre N comprend un N^{ième} critère d'accès et une clé de déchiffrement du contenu audiovisuel protégé, cette clé étant elle-même encryptée.

Pour un message de vérification de droits d'ordre i, i prenant initialement une valeur égale à 1, un test est réalisé afin de vérifier si des droits associés à un équipement satisfont au i^{ème} critère d'accès. En cas de test positif pour l'indice i, le message de vérification de droits d'ordre i+1 est déchiffré et une réitération dudit test pour l'indice i+1 est commandée. En cas de test positif pour l'indice N, on accède à la clé de déchiffrement du contenu audiovisuel protégé.

Ainsi, en encapsulant un message de vérification de droits dans un autre message de vérification de droits, il devient possible de combiner les tests de critères d'accès, de sorte que le contrôle d'accès peut être rendu plus élaboré.

Un tel enchainement de critères d'accès par messages de vérification de droits imbriqués permet de multiplier les possibilités de services, pour accéder à un même contenu, et ce de façon compatible avec les formats et dispositifs existants, par exemple les cartes actuelles de contrôle d'accès. Les systèmes de contrôles d'accès existants peuvent ainsi être enrichis pour implémenter le procédé selon un aspect de l'invention, sans modifier leurs spécifications.

En outre, en imposant un ordre d'exécution des différents tests de critères d'accès, ce procédé permet de s'assurer que le contrôle d'accès s'effectue suivant un chemin bien défini.

Bien entendu, on peut prévoir d'encapsuler successivement plusieurs messages de vérification de droits, c'est-à-dire que N est strictement supérieur à 2. La structure d'un tel message en « poupées russes » définit l'ordre dans lequel effectuer les tests de critères d'accès.

Si N=2, un message de vérification de droits est encapsulé dans un autre message de vérification de droits. Par exemple, un contenu peut n'être accessible que si l'utilisateur a souscrit à deux abonnements. Le procédé selon un aspect de l'invention permet de tester de façon séparée si chacun de ces abonnements a bien été souscrit.

Les différents tests de critère d'accès peuvent être effectués par un ou plusieurs dispositifs distincts. Par exemple, le test du (i+1)^{ième} critère d'accès peut être effectué par le même dispositif que le dispositif ayant effectué le test du i^{ème} critère(s) d'accès, et le déchiffrement du message de vérification de droits d'ordre i+1, ou bien par un autre dispositif, éventuellement distant.

Le contrôle d'accès peut ainsi être réparti sur plusieurs dispositifs, permettant ainsi de nouvelles configurations. En particulier, un test de contrôle d'accès, pour l'ordre i, peut être effectué par une passerelle d'entrée de réseau, et un autre test, pour un ordre supérieur i+j, j>0, par un terminal de ce réseau. Le contrôle d'accès peut ainsi s'adapter à l'architecture réseau. Il est ainsi possible de gérer un abonnement au niveau de la passerelle réseau, puis de redistribuer le contenu protégé ainsi que le message de vérification de droits d'ordre i+j au terminal du réseau domestique, sans création en local de nouveau message de contrôle d'accès.

Ce procédé permet également deux (ou davantage) tests de contrôle d'accès avec des messages de vérification de droits relevant de formats différents. Par exemple, un message de vérification de droits d'ordre i, obéissant à un premier format, peut inclure un message de vérification de droits d'ordre i+j obéissant à un deuxième format. On peut ainsi passer d'un système selon une première norme à un système selon une deuxième norme, sans avoir recours à des conversions de format par des dispositifs de type bridge lors du contrôle d'accès, par exemple des dispositifs tels que ceux décrits dans le document EP 1169856. Ces conversions de format risquant de laisser apparaître des éléments en clair, on évite ainsi les possibles failles de sécurité causées par ces dispositifs de type bridge.

Le contenu audiovisuel protégé peut par exemple être diffusé, par exemple pour des applications de télévision à péage, ou bien encore être téléchargé à la demande.

L'invention trouve un exemple d'application dans les systèmes de contrôle d'accès, par exemple Eurocrypt.

Les messages de vérification de droits peuvent comprendre des ECMs, en particulier dans le cadre d'un contenu audiovisuel diffusé. Les ECMs peuvent se conformer par exemple à la norme UTE-C-90.007. L'invention n'est bien entendu pas limitée à cette application : par exemple, le contenu protégé peut être téléchargé à la demande et les messages de vérification de droits peuvent comprendre par exemple des STKMs (de l'anglais « Short Term Key Message ») conformes à la norme OMA-BCAST par exemple.

Par exemple, un STKM peut être encrypté et encapsulé dans un message ECM.

On peut prévoir qu'un test positif d'un critère d'accès d'ordre i<N ne conduise pas accéder directement à une clé de déchiffrement, c'est-à-dire qu'un message de vérification de droits d'ordre i<N, par exemple un ECM ou un STKM, ne comprend pas directement de clé de déchiffrement.

Alternativement, on peut prévoir qu'il existe au moins un rang i<N tel que le message de vérification de droits d'ordre i comprenne, outre le message de vérification de droits d'ordre i+1 et le i^{ème} critère d'accès, une clé de déchiffrement sous forme encryptée, dite clé d'ordre i, distincte de la clé de déchiffrement comprise dans le message de vérification de droits d'ordre N.

Ainsi, si le test du i^{ème} critère d'accès est positif, on accède d'ores et déjà à une clé de déchiffrement. L'incorporation de clés de déchiffrement d'ordre i<N permet de rendre le contrôle d'accès encore plus élaboré.

Par exemple, cette clé de déchiffrement d'ordre i<N peut servir à effectuer un premier déchiffrement du contenu audiovisuel protégé. On peut par exemple prévoir que l'accès au contenu audiovisuel nécessite au moins deux déchiffrements successifs, le premier avec la clé de déchiffrement d'ordre i en cas de test positif du i^{ème} critère d'accès, et le deuxième avec la clé de déchiffrement obtenue après test positif du N^{ième} critère d'accès. On pourrait envisager que le premier déchiffrement fournisse un contenu en clair de qualité moyenne et le deuxième déchiffrement un contenu en clair de qualité supérieure.

On peut alternativement prévoir que la clé d'ordre i permette de déchiffrer un autre contenu audiovisuel. Ainsi, le message de vérification de droits d'ordre i peut comprendre, outre le message de vérification de droits d'ordre i+1 et le j^{ième} critère d'accès, une clé de déchiffrement d'ordre i sous forme encryptée. En cas de test positif pour l'indice i, on accède à la clé de déchiffrement d'ordre i et on déchiffre un contenu audiovisuel supplémentaire à l'aide de cette clé de déchiffrement. En cas de test positif pour l'indice N, on déchiffre le contenu audiovisuel protégé à l'aide de la clé de déchiffrement contenue dans le message d'ordre N.

Ainsi, l'accès au contenu audiovisuel protégé n'est possible que si l'accès au contenu audiovisuel supplémentaire est autorisé..L'invention n'est en rien limitée par l'existence d'une (ou plusieurs) clé d'ordre i<N, ni par l'usage de cette clé de déchiffrement contenue dans le message d'ordre i<N.

On peut prévoir qu'il existe au moins un indice i<N pour lequel le message de vérification de droits d'ordre i comprenne, outre le i^{éme} critère d'accès, un premier et un deuxième messages de vérification de droits d'ordre (i+1). Les premier et un deuxième messages peuvent ainsi être destinés chacun à des dispositifs distincts. En cas de test positif du i^{ème} critère d'accès par un premier équipement, par exemple une passerelle d'entrée de réseau, le premier message et le deuxième messages peuvent être transmis à deux terminaux distincts, pour des vérifications de critères d'accès différents. Ainsi, après un i^{ème} contrôle, on accède simultanément à plusieurs messages obéissant éventuellement à des formats différents.

Le procédé selon un aspect de l'invention offre ainsi une relative souplesse quant aux possibilités de réalisation du contrôle d'accès, et permet ainsi de résoudre, au moins en partie, le problème d'interopérabilité des gestions de droits ou DRM (de l'anglais « Digital Rights Management ») à l'intérieur d'un réseau local.

Selon un autre aspect, l'invention a pour objet un système de contrôle d'accès à un contenu audiovisuel protégé, comprenant
- des moyens de réception agencés pour recevoir un message comprenant une pluralité d'au moins N>1 messages de vérification de droits placés les uns à l'intérieur des autres et d'ordres respectifs i avec 1 ≤ *i* ≤ *N ,* le message de vérification de droits d'ordre i<N contenant un i^{ième} critère d'accès et le message de vérification de droits d'ordre i+1 sous forme encryptée, le message de vérification de droits d'ordre N comprenant un N^{ième} critère d'accès et une clé de déchiffrement du contenu audiovisuel protégé, cette clé étant elle-même encryptée,
- des moyens de sécurité agencés pour réaliser, pour un message de vérification de droits d'ordre i, i prenant initialement une valeur égale à 1, un test afin de vérifier si des droits associés à un équipement satisfont au i^{ème} critère d'accès,
- des moyens de déchiffrement agencés pour, en cas de test positif pour l'indice i, déchiffrer le message de vérification de droits d'ordre i+1 et commander aux moyens de sécurité une réitération dudit test pour l'indice i+1,
- des moyens pour, en cas de test positif pour l'indice N, accéder à la clé de déchiffrement du contenu audiovisuel protégé.

Les moyens de sécurité peuvent être intégrés en un seul dispositif ou bien comprendre une pluralité de dispositifs éventuellement distants les uns des autres. De manière générale, le système de contrôle d'accès peut être intégré en un seul dispositif, ou bien en une pluralité de dispositifs.

Par exemple les moyens de sécurité peuvent comprendre un premier et un deuxième composants de sécurité incluant éventuellement des moyens de déchiffrement. Le premier composant de sécurité peut être agencé pour tester si des droits associés à ce premier composant de sécurité satisfont au premier critère d'accès, et le deuxième composant de sécurité peut être agencé pour tester si des droits associés à ce deuxième composant de sécurité satisfont à l'autre ou aux autres critère(s) d'accès, c'est-à-dire au deuxième,..., N^{ième} critère d'accès. Le deuxième composant de sécurité peut inclure les moyens d'accès à la clé de déchiffrement contenue dans le message de vérification de droits d'ordre N.

Ces composants de sécurité peuvent être confondus, appartenir à un même équipement, ou bien encore à des équipements distants.

L'invention n'est en rien limitée par la nature des composants de sécurité. Le premier et/ou le deuxième composant de sécurité peuvent par exemple comprendre un module de sécurité portable, par exemple une carte à puce, une clé USB, ou autre. Le premier et/ou le deuxième composant de sécurité peuvent par exemple comprendre des moyens logiciels.

Le contenu audiovisuel peut être affiché sur n'importe quel type de terminal, par exemple un ordinateur, un téléphone portable, un PDA (de l'anglais « Personal Digital Assistant »), ou autre.

Selon encore un autre aspect, l'invention a pour objet un programme d'ordinateur destiné à être stocké dans une mémoire d'un dispositif, et/ou stocké sur un support mémoire destiné à coopérer avec un lecteur de ce dispositif et/ou téléchargé via un réseau de télécommunication. Ce programme comporte des instructions pour la mise en oeuvre du procédé selon un aspect de l'invention, lorsque ces instructions sont exécutées par un processeur de ce dispositif.

Selon encore un autre aspect, l'invention a pour objet un message de contrôle d'accès à un contenu audiovisuel protégé, comprenant une pluralité d'au moins N>1 de messages de vérification de droits placés les uns à l'intérieur des autres et d'ordres respectifs i avec 1 ≤ *i* ≤ *N*, le message de vérification de droits d'ordre i<N contenant un i^{ième} critère d'accès et le message de vérification de droits d'ordre i+1 sous forme encryptée, le message de vérification de droits d'ordre N comprenant un N^{ième} critère d'accès et une clé de déchiffrement du contenu audiovisuel protégé, elle-même encryptée.

Selon un autre aspect, l'invention a pour objet un procédé de gestion du contrôle d'accès à un contenu audiovisuel protégé, dans lequel au moins un message de vérification de droits d'ordre N>1 est reçu, ce message comprenant au moins un N^{ième} critère d'accès et une clé de déchiffrement du contenu audiovisuel protégé, cette clé étant sous forme encryptée. Pour chaque indice j d'une succession d'indices j avec j variant de 1 à N-1, un message de vérification de droits d'ordre N-j comprenant au moins un message de vérification de droits d'ordre N-j+1 sous forme encryptée et au moins un (N-j)^{ième} critère d'accès est généré.

Ce procédé permet d'encapsuler un message de vérification de droits dans un autre message de vérification de droits. Ce procédé peut ainsi permettre d'encapsuler successivement une série de messages de vérification en droits, en « poupées russes ».

Ce procédé peut être compatible avec des standards et des équipements existants, par exemple les équipements générant les ECMs de l'art antérieur.

Selon un autre aspect, l'invention a pour objet un dispositif de gestion du contrôle d'accès à un contenu audiovisuel protégé, comprenant des moyens de traitement agencés pour recevoir au moins un message de vérification de droits d'ordre N>1 comprenant au moins un N^{ième} critère d'accès et une clé de déchiffrement du contenu audiovisuel protégé, ladite clé étant sous forme encryptée, et pour générer un message de vérification de droits d'ordre N-j, pour chaque indice j d'une succession d'indices j avec j variant de 1 à N-1, ledit message d'ordre N-j comprenant au moins un message de vérification de droits d'ordre N-j+1 sous forme encryptée et au moins un (N-j)^{ième} critère d'accès. Ces moyens de traitement, dits deuxièmes moyens de traitement, peuvent recevoir le message de vérification de droits d'ordre N d'autres moyens de traitements. Ces autres moyens de traitements, dits premiers moyens de traitement, peuvent être aptes à générer le message de vérification de droits d'ordre N à partir de la clé de déchiffrement du contenu audiovisuel protégé et du N^{ième} critère d'accès.

Les premier et deuxième moyens de traitement peuvent être confondus ou distincts, faire partie d'un même équipement ou bien encore faire partie de deux équipements respectifs distincts. Ces deux équipements distincts peuvent éventuellement être distants l'un de l'autre, et/ou appartenir à deux opérateurs différents.

Selon un autre aspect, l'invention a pour objet un programme d'ordinateur comportant des instructions pour la mise en oeuvre du procédé de gestion du contrôle d'accès à un contenu audiovisuel protégé selon un aspect de l'invention, lorsque lesdites instructions sont exécutées par un processeur.

D'autres particularités et avantages de la présente invention apparaîtront dans la description détaillée ci-après, faite en référence aux dessins annexés sur lesquels :
- La figure 1 montre un exemple de message de contrôle d'accès selon un mode de réalisation de l'invention,
- La figure 2A montre un exemple de système de gestion du contrôle d'accès, selon un mode de réalisation de l'invention.
- La figure 2B montre un exemple de système de contrôle d'accès, selon un mode de réalisation de l'invention.
- La figure 3A est un organigramme d'un exemple de procédé exécutable par le système de la figure 2A,
- La figure 3B est un organigramme d'un exemple de procédé exécutable par le système de la figure 2B,
- La figure 4 montre un exemple de système de gestion de contrôle d'accès, selon un mode de réalisation de l'invention,
- La figure 5A montre un exemple de message de contrôle d'accès selon un autre mode de réalisation de l'invention,
- La figure 5B montre un exemple de système de contrôle d'accès selon un mode de réalisation de l'invention.

Des références identiques désignent des objets identiques ou similaires d'une figure à l'autre.

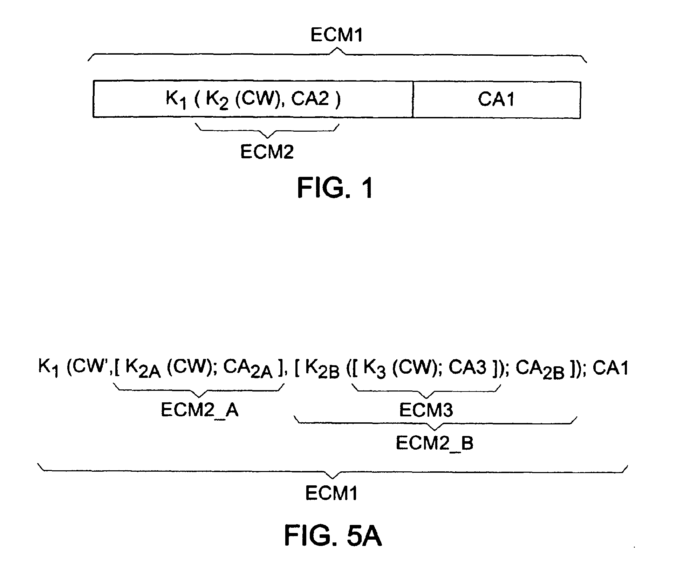

On se réfère tout d'abord à la figure 1, sur laquelle on a représenté un exemple de message de contrôle d'accès selon un mode de réalisation de l'invention. Ce message comprend un message de vérification de droits d'ordre 1 ECM1, ici un ECM. Le message ECM1 comprend un ou plusieurs critères d'accès représentés sous la référence CA1, et un message de vérification de droits d'ordre 2 ECM2, ici un ECM.

Le message ECM2 est encrypté. Les critères d'accès CA1 définissent des conditions d'accès relatives au déchiffrement du message ECM2, par exemple avoir souscrit à un abonnement, avoir plus de 18 ans, ou autre.

Le message ECM2 comprend lui-même un ou plusieurs critères d'accès représentés sous la référence CA2, ainsi qu'une clé de déchiffrement d'un contenu audiovisuel protégé, ici un mot de contrôle CW.

Ce mot de contrôle CW est lui-même encrypté. Les critères d'accès CA2 définissent des conditions d'accès relatives au déchiffrement du mot de contrôle CW, par exemple avoir souscrit à un abonnement, avoir plus de 18 ans, ou autre.

On pourrait bien entendu prévoir d'encapsuler le message ECM1 dans un autre message de vérification de droits, par exemple un STKM ou un autre ECM.

Cette structure de message impose une séquence de tests de contrôles d'accès avant d'accéder au mot de contrôle CW. En effet, de manière générale, lorsqu'un message d'ordre i est encapsulé dans un message d'ordre i-1, seule la bonne exécution du traitement du message d'ordre i-1 permet d'obtenir le message en clair d'ordre i à traiter lui-même. En cas de plusieurs imbrications, l'accès au mot de contrôle peut n'être rendu possible que si tous les intermédiaires définis par un ou plusieurs opérateurs satisfont aux critères d'accès, et ceci dans un ordre imposé.

Pour chaque message ECM1, ECM2, l'intégralité des critères d'accès CA1, CA2 respectivement et des données cryptées ECM2, CW respectivement, est ici garantie par une signature électronique.

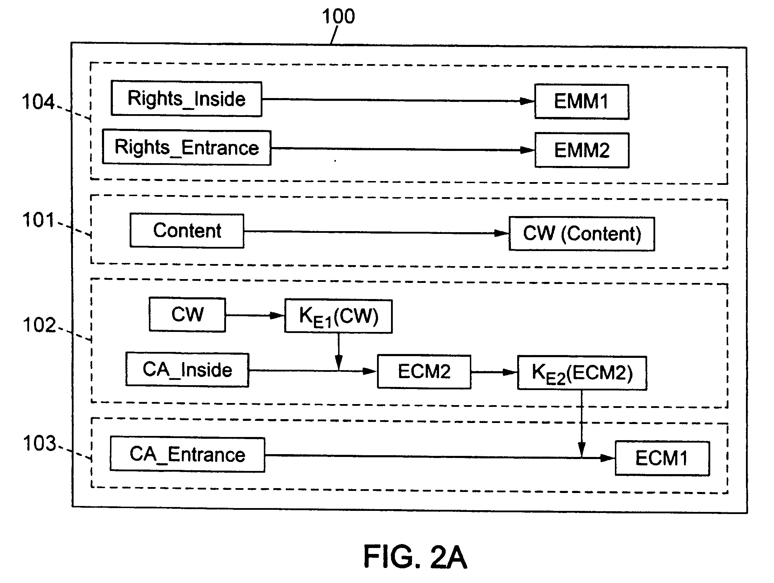

La figure 2A montre un exemple de système de gestion du contrôle d'accès. Bien que représenté de façon structurelle par un seul dispositif, ce système 100 peut être composé de un ou plusieurs dispositifs, éventuellement distants les uns des autres.

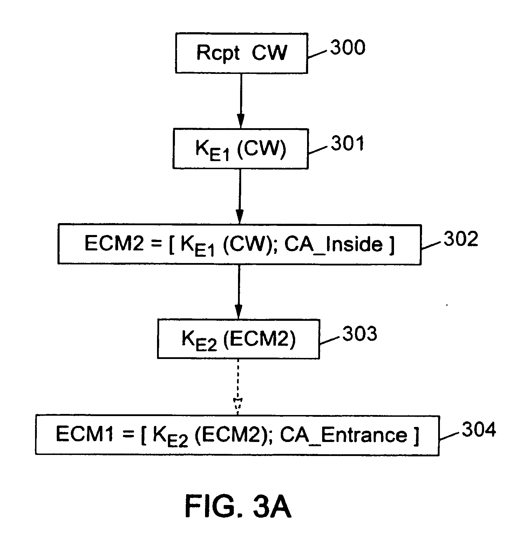

La figure 3A illustrant un procédé exécutable par le système de la figure 2A, ces deux figures seront commentées simultanément.

Le système 100 comprend un dispositif de chiffrement 101 d'un contenu audiovisuel CONTENT, en utilisant un mot de contrôle CW. Le dispositif de chiffrement 101 est en soi connu de l'homme du métier et ne sera pas décrit davantage. Le dispositif 101 peut être distinct du ou des autres équipement(s) du système 100.

Le système 100 comprend en outre des premiers moyens de traitement 102 pour générer un message de vérification des droits ECM2 d'ordre N=2. A cette fin, après une étape 300 sur la figure 3A de réception du mot de contrôle par exemple du dispositif 101 de la figure 2A, le mot de contrôle CW est encrypté à l'aide d'une clé d'exploitation K_{E1}, lors d'une étape 301. Le message ECM2 généré lors d'une étape 302 comprend le mot de contrôle CW encrypté ainsi qu'un critère CA_Inside, par exemple un critère d'accès à tester au sein d'un réseau domestique.

Le système 100 comprend en outre des deuxièmes moyens de traitement 103 pour générer un message de vérification de droits d'ordre 1 ECM1. Ce message ECM1 généré lors d'une étape 304 sur la figure 3A comprend le message ECM2 encrypté et un ou des critères CA_Entrance, par exemple des critères d'accès à un réseau local domestique.

La génération d'un ECM à partir de critères d'accès et de données cryptées fait appel à des procédés bien connus de l'homme du métier et ne sera pas détaillée davantage.

Les premiers moyens de traitement 102 et les deuxièmes moyens de traitement 103 peuvent comprendre deux équipements respectifs, éventuellement distants l'un de l'autre. Dans ce cas, on peut prévoir que l'équipement 102 intègre des moyens pour crypter lors d'une étape 303 le message ECM2, par exemple à l'aide d'une clé d'exploitation K_{E2} ou d'une autre clé, de sorte que le message ECM2 est transmis sous forme encryptée d'un équipement à l'autre. Cette transmission est représentée sur la figure 3A par une flèche en pointillés.

Par ailleurs, le système 100 est apte à générer des messages d'inscription de droits, par exemple des messages EMM.

Par exemple, un équipement 104 du système 100 comprend une mémoire stockant des valeurs de droits Rights_Entrance pour chaque réseau local inscrit, et des moyens de génération d'un message EMM1 à partir de ces valeurs Rights_Entrance. Les valeurs Rights_Entrance peuvent définir les droits attachés à par exemple un réseau domestique ou à un réseau local d'entreprise, par exemple une période d'utilisation octroyée, un crédit de temps d'accès à un contenu audiovisuel protégé, etc.

Par exemple, ce même équipement 104 comprend en outre une mémoire stockant des valeurs de droits Rights_Inside pour chaque terminal inscrit, et des moyens de génération d'un message EMM2 à partir de ces valeurs Rights_Inside. Les valeurs Rights_Inside peuvent définir les droits de type « maison » attachés à un terminal, par exemple si ce terminal peut afficher des contenus interdits aux moins de 18 ans, etc.

Alternativement, ce deux dispositifs distincts, éventuellement distants et/ou gérés par des entités différentes, qui génèrent les messages EMM1, EMM2 respectivement.

La génération d'un EMM est connue de l'homme du métier et ne sera pas détaillée davantage.

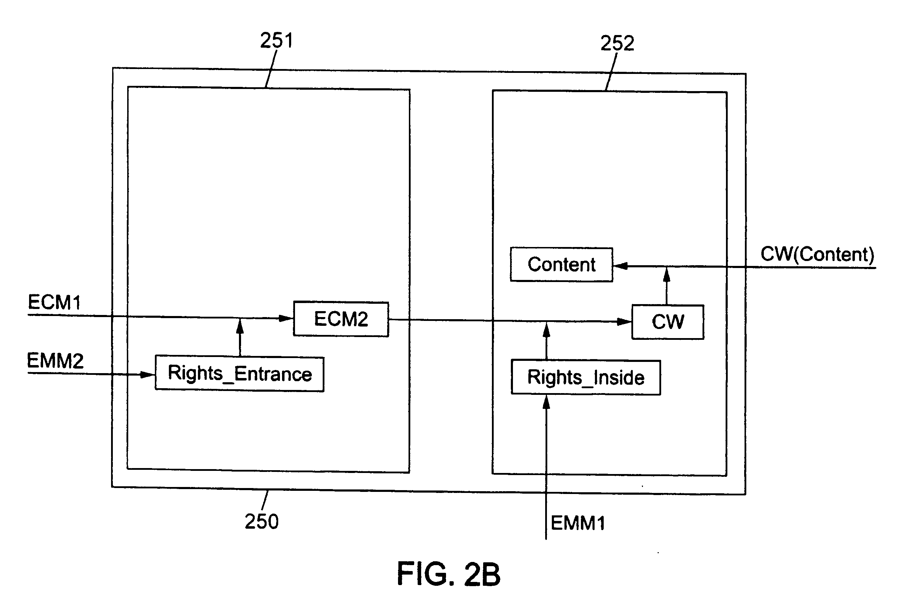

La figure 2B montre un exemple de système de contrôle d'accès 250. Dans cet exemple, le système 250 comprend plusieurs dispositifs 251, 252 mais on peut prévoir un système avec un seul dispositif. Le système 250, situé par exemple dans les locaux d'une entreprise ou d'un particulier, est destiné à recevoir les messages EMM1, EMM2, CW(CONTENT) et ECM1 générés par le système de la figure 2A.

Un dispositif 251, de préférence un composant de sécurité, par exemple un logiciel protégé d'une passerelle d'entrée de réseau local, comporte une mémoire pour stocker des droits Rights_Entrance, par exemple les droits attachés à un réseau domestique ou à un réseau local. Ces droits sont mis à jour suite à la réception du message d'inscription de droits EMM2, suivant un procédé bien connu de l'homme du métier.

Un dispositif 252, par exemple un système de décodage comprenant un décodeur et un composant de sécurité, par exemple une carte à puce, comporte une mémoire pour stocker des droits Rights_Inside, par exemple les droits attachés au décodeur. Ces droits sont mis à jour suite à la réception du message d'inscription de droits EMM1, suivant un procédé bien connu de l'homme du métier.

La fréquence de renouvellement des droits Rights_Entrance, Rights_Inside dépend des choix opérateurs.

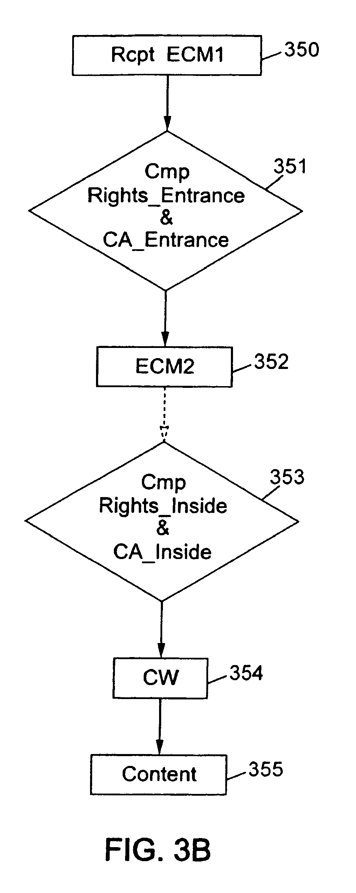

En référence à la figure 3B, le message ECM1 encapsulant le message ECM2 est reçu, lors d'une étape 350. Des moyens de réception, non représentés sur la figure 2B et bien connus de l'homme du métier, sont utilisés à cet effet.

On teste lors d'une étape 351 si les droits Rights_Entrance gardés en mémoire du composant de sécurité 251 satisfont au(x) critère(s) d'accès passerelle CA_Entrance du message ECM1 reçu, sur la base de comparaisons avec les droits Rights_Entrance.

Si le test est positif, le composant de sécurité 251 déchiffre le message encapsulé ECM2, par exemple à l'aide d'une clé d'exploitation stockée de façon protégée dans le composant de sécurité 251, lors d'une étape 352. Le déchiffrement peut être le fait de moyens de déchiffrement internes ou externes au composant de sécurité 251.

Si le test est négatif, le composant de sécurité 251 interdit le déchiffrement du message encapsulé ECM2. La récupération du message ECM2 impose que le message ECM1 soit d'abord traité par la passerelle 251, et que celle-ci possède les droits associés.

Le message ECM2 déchiffré est alors transmis du composant de sécurité 251 au composant de sécurité 252. Cette transmission est représentée sur la figure 3B par une flèche en pointillés. On peut prévoir, afin d'éviter d'exposer le message ECM2 en clair entre les composants 251, 252, un cryptage du message ECM2 préalablement à la transmission, et un décryptage du message ECM2 encrypté par le dispositif 252.

On teste lors d'une étape 353 si les droits Rights_Inside gardés en mémoire du composant de sécurité 252 satisfont au(x) critère(s) d'accès CA_Inside du message ECM2 reçu, sur la base de comparaisons avec les droits Rights_Inside. Le contrôle d'accès pour les équipements « dans la maison » peut être plus simple que celui imposé pour « l'entrée de la maison ».

Si le test est positif, le composant de sécurité 252 déchiffre le mot de contrôle CW, par exemple à l'aide d'une clé d'exploitation stockée de façon protégée au sein du composant 252, lors d'une étape 354. Le déchiffrement peut être le fait de moyens de déchiffrement internes ou externes au composant de sécurité 252.

Si le test est négatif, le composant de sécurité 252 interdit l'accès au mot de contrôle CW.

Le mot de contrôle CW peut alors être transmis à un décodeur du système de décodage 252 en vue d'un déchiffrement du contenu protégé CW(CONTENT) lors d'une étape 355.

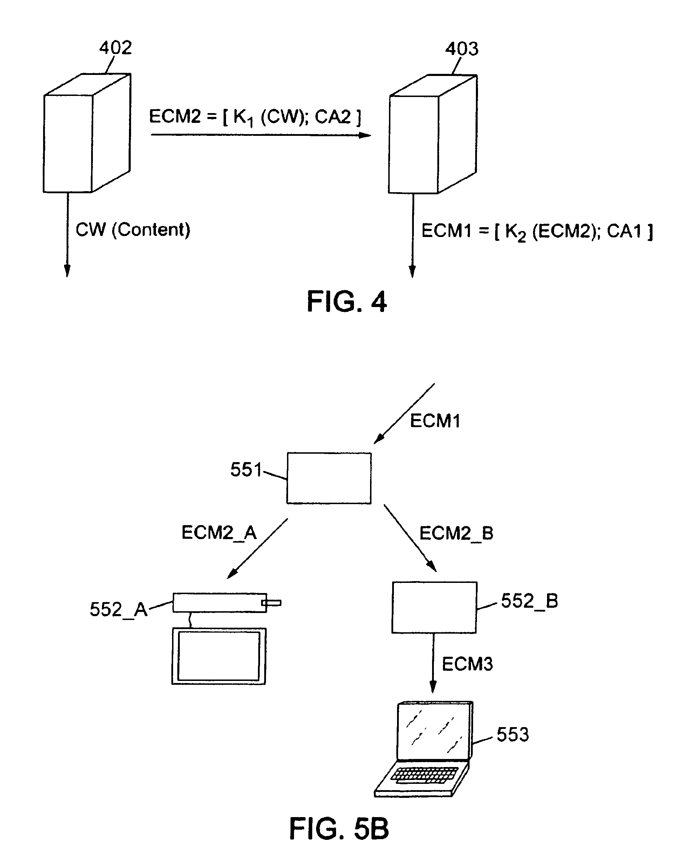

La figure 4 montre un exemple de système de gestion de contrôle d'accès, selon un mode de réalisation de l'invention.

Ce système comprend un ensemble de dispositifs représentés sous la référence 402. Cet ensemble comporte d'une part un encodeur non représenté pour chiffrer un contenu audiovisuel CONTENT à l'aide d'un mot de contrôle CW, et d'autre part des premiers moyens de traitement non représentés et aptes à générer un message ECM2. Ce message ECM2 comprend le mot de contrôle CW sous forme encryptée, et des critères d'accès CA2. La référence 402 désigne ainsi plusieurs dispositifs, éventuellement distants les uns des autres et/ou gérés par des entités différentes.

Le dispositif générant le message ECM2 comprend des moyens de transmission non représentés du message ECM2 à un dispositif 403.

Les premiers moyens de traitement et l'équipement 403 peuvent appartenir à différents opérateurs, par exemple un opérateur de réseau et un opérateur de bouquet.

Le message ECM2 peut être transmis sous forme encryptée, ou bien encore on peut prévoir de sécuriser la transmission.

Le dispositif 403 reçoit le message ECM2 et génère un message ECM1.

Le contenu audiovisuel protégé CW(CONTENT) généré par l'encodeur est diffusé. Le dispositif 403, contrôlé par exemple par un opérateur de réseau, diffuse le message ECM1.

A la réception, il sera nécessaire de vérifier que les droits satisfont aux critères d'accès CA1 définis par l'opérateur de réseau, avant de pouvoir vérifier que les critères d'accès CA2 de l'opérateur de bouquet sont également satisfaits.

Ainsi, pour toutes les applications pour lesquelles il est nécessaire de souscrire à deux abonnements pour pouvoir accéder à un contenu audiovisuel protégé, ce système peut conduire à générer des messages nécessitant deux vérifications, une pour chaque abonnement.

Les tests de critères d'accès peuvent être variés.

Par exemple, dans le cadre d'un réseau d'entreprise, on peut prévoir un dispositif de passerelle recevant des ECMs dont les critères d'accès indiquent si un contenu audiovisuel présente un caractère illicite ou non. Un premier test est effectué afin d'empêcher l'accès aux contenus de caractère illicite. En cas de succès, la passerelle accède à un ECM encapsulé dans l'ECM reçu et transmet cet ECM encapsulé au terminal requis. Ce terminal est relié à une clé USB d'un salarié de l'entreprise, cette clé stockant les droits associés à ce salarié. Un deuxième test est alors effectué, de sorte que le salarié n'accède au contenu audiovisuel demandé que si les critères d'accès de l'ECM encapsulé sont satisfaits.

La figure 5A montre un exemple de message selon un autre mode de réalisation. Ce message ECM1 comporte plusieurs ECMs encapsulés ensembles ECM2_A, ECM2_B, ainsi qu'une clé de déchiffrement d'ordre 1 CW'. Est encapsulé à l'intérieur du message ECM2_B un ECM supplémentaire ECM3.

La figure 5B montre un exemple de système de contrôle d'accès susceptible de traiter un tel message ECM1.

Une passerelle 551 reçoit le message ECM1 de la figure 5A, et teste les critères d'accès CA1 de ce message ECM1. Par exemple, la passerelle 551 vérifie qu'il a bien été souscrit à un abonnement d'un opérateur de réseau donné.

Le cas échéant, les messages ECM2_A, ECM2_B et la clé CW' sont déchiffrés par la passerelle 551.

La passerelle 551 peut effectuer un premier déchiffrement d'un contenu audiovisuel protégé, en utilisant la clé CW'. Ce premier déchiffrement peut par exemple conduire à une image relativement brouillée, mais sur laquelle un utilisateur peut distinguer des formes.

La passerelle 551 transmet le message ECM2_A à l'équipement 552_A, et le message ECM2_B à l'équipement 552_B.

Par exemple, l'équipement 552_A possède des droits pour accéder aux chaines d'un certain bouquet, éventuellement à certaines heures seulement. L'équipement 552_A peut par exemple comporter un décodeur de télévision et une carte à puce. La carte à puce vérifie que les critères d'accès CA_{2A} du message ECM2_A reçu correspondent aux droits acquis. Le cas échéant, cet équipement 552_A accède au mot de contrôle CW permettant de déchiffrer complètement le contenu audiovisuel.

Par exemple, l'équipement 552_B possède les mêmes droits que l'équipement 552_A, et les critères d'accès CA_{2B} du message ECM2_B sont identiques aux critères CA_{2A} du message ECM2 A. Toutefois, même si le test effectué par l'équipement 552_B est un succès, cet équipement n'accède pas directement au mot de contrôle CW permettant de déchiffrer complètement le contenu audiovisuel.

En effet, on peut prévoir un troisième test, l'équipement 552_B étant par exemple relié à un terminal destiné à un enfant. Ce troisième test peut permettre de vérifier que le contenu audiovisuel n'est pas déconseillé aux enfants, en testant les critères d'accès du message ECM3. Le contenu audiovisuel déchiffré ne sera affiché sur le terminal 553 que si ce troisième test est un succès.

L'équipement 552_B joue donc ici un rôle de passerelle. Dans un autre exemple de réalisation, on pourrait envisager que l'équipement 552_B accède au mot de contrôle, après récupération de celui-ci auprès du terminal 553.

## Revendications

1. Procédé de contrôle d'accès à au moins un contenu audiovisuel protégé, comprenant les étapes :
recevoir (350) un message comprenant une pluralité d'au moins N messages de vérification de droits (ECM1, ECM2) placés les uns à l'intérieur des autres et d'ordres respectifs i avec 1 ≤ *i* ≤ *N*, le message de vérification de droits d'ordre i<N contenant un i^{ième} critère d'accès (CA_Entrance) et le message de vérification de droits d'ordre i+1 sous forme encryptée, le message de vérification de droits d'ordre N comprenant un N^{ième} critère d'accès (CA_Inside) et une clé de déchiffrement (CW) du contenu audiovisuel protégé, elle-même encryptée,
pour le message de vérification de droits d'ordre i, i prenant initialement la valeur 1, réaliser un test (351) afin de vérifier si des droits associés à un équipement satisfont au i^{ème} critère d'accès,
en cas de test positif pour l'indice i, déchiffrer (352) le message de vérification de droits d'ordre i+1 et commander une réitération dudit test pour l'indice i+1,
en cas de test positif pour l'indice N, accéder (354) à la clé de déchiffrement (CW) du contenu audiovisuel protégé.

2. Procédé selon la revendication 1, dans lequel au moins un message de vérification de droits d'ordre i<N (ECM1) comprend, outre le message de vérification de droits d'ordre i+1 (ECM2_A, ECM2_B) et le i^{ème} critère d'accès (CA1), une clé de déchiffrement (CW') sous forme encryptée, dite clé d'ordre i, distincte de la clé de déchiffrement (CW) comprise dans le message de vérification de droits d'ordre N.

3. Procédé selon la revendication 2, dans lequel
le procédé comprend, en cas de test positif du i^{ième} critère d'accès, les étapes consistant à accéder à ladite clé de déchiffrement d'ordre i (CW') et déchiffrer le contenu audiovisuel à l'aide de ladite clé de déchiffrement.

4. Procédé selon la revendication 2, dans lequel le procédé comprend les étapes suivantes :
en cas de test positif pour l'indice i, accéder à la clé de déchiffrement d'ordre i et déchiffrer à l'aide de ladite clé de déchiffrement d'ordre i un contenu audiovisuel supplémentaire distinct du contenu audiovisuel protégé, et
en cas de test positif pour l'indice N, déchiffrer le contenu audiovisuel protégé à l'aide de la clé de déchiffrement du contenu audiovisuel protégé.

5. Procédé selon la revendication 1, dans lequel
au moins un message de vérification de droits d'ordre i<N (ECM1) comprend, outre le i^{ème} critère d'accès (CA1), un premier et un deuxième message de vérification de droits (ECM2_A, ECM2_B) d'ordre i+1.

6. Système (250) de contrôle d'accès à un contenu audiovisuel protégé, comprenant
des moyens de réception agencés pour recevoir un message comprenant une pluralité d'au moins N messages de vérification de droits (ECM1, ECM2) placés les uns à l'intérieur des autres et d'ordres respectifs i avec 1 ≤ *i* ≤ *N* , le message de vérification de droits d'ordre i<N contenant un i^{ième} critère d'accès (CA_Entrance) et le message de vérification de droits d'ordre i+1 sous forme encryptée, le message de vérification de droits d'ordre N comprenant un N^{ième} critère d'accès (CA_Inside) et une clé de déchiffrement (CW) du contenu audiovisuel protégé, elle-même encryptée,
des moyens de sécurité (251, 252) agencés pour réaliser, pour un message de vérification de droits d'ordre i, i prenant initialement la valeur 1, un test afin de vérifier si des droits associés à un équipement satisfont au i^{ème} critère d'accès,
des moyens de déchiffrement (251) agencés pour, en cas de test positif pour l'indice i, déchiffrer le message de vérification de droits d'ordre i+1 et commander aux moyens de sécurité une réitération dudit test pour l'indice i+1,
des moyens (252) pour, en cas de test positif pour l'indice N, accéder à la clé de déchiffrement (CW) du contenu audiovisuel protégé.

7. Programme d'ordinateur comportant des instructions pour la mise en oeuvre du procédé selon la revendication 1, lorsque lesdites instructions sont exécutées par un processeur.

8. Message de contrôle d'accès à un contenu audiovisuel protégé, comprenant une pluralité d'au moins N messages de vérification de droits (ECM1, ECM2) placés les uns à l'intérieur des autres et d'ordres respectifs i avec 1 ≤ *i* ≤ *N ,* le message de vérification de droits d'ordre i<N contenant un i^{ième} critère d'accès (CA1) et le message de vérification de droits d'ordre i+1 sous forme encryptée (K₁(ECM2)), le message de vérification de droits d'ordre N comprenant un N^{ième} critère d'accès (CA2) et une clé de déchiffrement (CW) du contenu audiovisuel protégé, elle-même encryptée.

9. Procédé de gestion du contrôle d'accès à un contenu audiovisuel protégé, comprenant les étapes consistant à
recevoir au moins un message de vérification de droits d'ordre N>1, ledit message (ECM2) comprenant au moins un N^{ième} critère d'accès (CA2) et une clé de déchiffrement du contenu audiovisuel protégé (CW), ladite clé étant sous forme encryptée,
pour chaque indice j d'une succession d'indices j avec j variant de 1 à N-1, générer un message de vérification de droits d'ordre N-j (ECM1) comprenant au moins un message de vérification de droits d'ordre N-j+1 (ECM2) sous forme encryptée et au moins un N-j^{iène} critère d'accès (CA1).

10. Dispositif (103) de gestion du contrôle d'accès à un contenu audiovisuel protégé, comprenant
des moyens de réception d'au moins un message de vérification de droits d'ordre N>1 (ECM2) comprenant au moins un N^{ième} critère d'accès (CA_Inside) et une clé de déchiffrement du contenu audiovisuel protégé (CW), ladite clé étant sous forme encryptée, et
des moyens de génération d'un message de vérification de droits d'ordre N-j (ECM1), pour chaque indice j d'une succession d'indices j avec j variant de 1 à N-1, ledit message d'ordre N-j comprenant au moins un message de vérification de droits d'ordre N-j+1 (ECM2) sous forme encryptée et au moins un N-j^{ième} critère d'accès (CA1).

11. Programme d'ordinateur comportant des instructions pour la mise en oeuvre du procédé selon la revendication 9, lorsque lesdites instructions sont exécutées par un processeur.

## Claims

1. Method for controlling access to at least one protected audiovisual content, comprising the steps:
receive (350) a message comprising a plurality of at least N entitlement verification messages (ECM1, ECM2) placed one inside the other and of respective orders i with 1 ≤ i ≤ N, the entitlement verification message of order i<N containing an i^{th} access criterion (CA Entrance) and the entitlement verification message of order i+1 in encrypted form, the entitlement verification message of order N comprising an N^{th} access criterion (CA_Inside) and a decryption key (CW), itself encrypted, for deciphering the protected audiovisual content,
for the entitlement verification message of order i, i initially taking the value 1, carry out a test (351) so as to verify whether entitlements associated with an item of equipment satisfy the i^{th} access criterion,
in case of positive test for the index i, decrypt (352) the entitlement verification message of order i+1 and instruct a repeat of said test for the index i+1,
in case of positive test for the index N, access (354) the decryption key (CW) for deciphering the protected audiovisual content.

2. Method according to Claim 1, in which at least one entitlement verification message of order i<N (ECM1) comprises, in addition to the entitlement verification message of order i+1 (ECM2_A, ECM2_B) and the i^{th} access criterion (CA1), a decryption key (CW') in encrypted form, termed the key of order i, distinct from the decryption key (CW) included in the entitlement verification message of order N.

3. Method according to Claim 2, in which
the method comprises, in case of positive test of the i^{th} access criterion, the steps consisting in accessing said decryption key of order i (CW') and decrypting the audiovisual content with the aid of said decryption key.

4. Method according to Claim 2, in which the method comprises the following steps:
in case of positive test for the index i, access the decryption key of order i and decrypt with the aid of said decryption key of order i an additional audiovisual content distinct from the protected audiovisual content, and
in case of positive test for the index N, decrypt the protected audiovisual content with the aid of the decryption key for deciphering the protected audiovisual content.

5. Method according to Claim 1, in which
at least one entitlement verification message of order i<N (ECM1) comprises, in addition to the i^{tn} access criterion (CA1), a first and a second entitlement verification message (ECM2_A, ECM2_B) of order i+1.

6. System (250) for controlling access to a protected audiovisual content, comprising
reception means designed to receive a message comprising a plurality of at least N entitlement verification messages (ECM1, ECM2) placed one inside the other and of respective orders i with 1 ≤ i ≤ N, the entitlement verification message of order i<N containing an i^{th} access criterion (CA_Entrance) and the entitlement verification message of order i+1 in encrypted form, the entitlement verification message of order N comprising an N^{th} access criterion (CA_Inside) and a decryption key (CW), itself encrypted, for deciphering the protected audiovisual content,
security means (251, 252) designed to carry out, for an entitlement verification message of order i, i initially taking the value 1, a test to verify whether entitlements associated with an item of equipment satisfy the i^{th} access criterion,
decryption means (251) designed to, in case of positive test for the index i, decrypt the entitlement verification message of order i+1 and instruct the security means to repeat said test for the index i+1,
means (252) for, in case of positive test for the index N, accessing the decryption key (CW) for deciphering the protected audiovisual content.

7. Computer program comprising instructions for the implementation of the method according to Claim 1, when said instructions are executed by a processor.

8. Message for controlling access to a protected audiovisual content, comprising a plurality of at least N entitlement verification messages (ECM1, ECM2) placed one inside the other and of respective orders i with 1 ≤ i ≤ N, the entitlement verification message of order i<N containing an i^{th} access criterion (CA1) and the entitlement verification message of order i+1 in encrypted form (K₁ (ECM2)), the entitlement verification message of order N comprising an N^{th} access criterion (CA2) and a decryption key (CW), itself encrypted, for deciphering the protected audiovisual content.

9. Method for managing the controlling of access to a protected audiovisual content, comprising the steps consisting in
receiving at least one entitlement verification message of order N>1, said message (ECM2) comprising at least one N^{tn} access criterion (CA2) and a decryption key for deciphering the protected audiovisual content (CW), said key being in encrypted form,
for each index j of a succession of indices j with j varying from 1 to N-1, generating an entitlement verification message of order N-j (ECM1) comprising at least one entitlement verification message of order N-j+1 (ECM2) in encrypted form and at least one N-j^{th} access criterion (CA1).

10. Device (103) for managing the controlling of access to a protected audiovisual content, comprising
means for receiving at least one entitlement verification message of order N>1 (ECM2) comprising at least one N^{th} access criterion (CA_Inside) and a decryption key for deciphering the protected audiovisual content (CW), said key being in encrypted form, and
means for generating an entitlement verification message of order N-j (ECM1), for each index j of a succession of indices j with j varying from 1 to N-1, said message of order N-j comprising at least one entitlement verification message of order N-j+1 (ECM2) in encrypted form and at least one N-j^{th} access criterion (CA1).

11. Computer program comprising instructions for the implementation of the method according to Claim 9, when said instructions are executed by a processor.

## Patentansprüche

1. Verfahren zur Kontrolle des Zugriffs auf mindestens einen geschützten audiovisuellen Inhalt, das die folgenden Schritte enthält:
Empfang (350) einer Mitteilung, die eine Vielzahl von mindestens N Berechtigungsprüfungsmitteilungen (ECM1, ECM2) enthält, die ineinander angeordnet und von jeweiligen Ordnungen i sind, mit 1 ≤ i ≤ N, wobei die Berechtigungsprüfungsmitteilung der Ordnung i<N ein i-tes Zugriffskriterium (CA_Entrance) und die Berechtigungsprüfungsmitteilung der Ordnung i+1 in verschlüsselter Form enthält, wobei die Berechtigungsprüfungsmitteilung der Ordnung N ein N-tes Zugriffskriterium (CA_Inside) und einen selbst verschlüsselten Entschlüsselungsschlüssel (C W) des geschützten audiovisuellen Inhalts enthält,
für die Berechtigungsprüfungsmitteilung der Ordnung i, wobei i anfangs den Wert 1 annimmt, Durchführung eines Tests (351), um zu prüfen, ob einer Ausrüstung zugeordnete Rechte das i-te Zugriffskriterium erfüllen,
im Fall eines positiven Tests für den Index i, Entschlüsseln (352) der Berechtigungsprüfungsmitteilung der Ordnung i+1 und Befehlen einer Wiederholung des Tests für den Index i+1,
im Fall eines positiven Tests für den Index N, Zugriff (354) auf den Entschlüsselungsschlüssel (CW) des geschützten audiovisuellen Inhalts.

2. Verfahren nach Anspruch 1, bei dem mindestens eine Berechtigungsprüfungsmitteilung der Ordnung i<N (ECM1) außer der Berechtigungsprüfungsmitteilung der Ordnung i+1 (ECM2_A, ECM2_B) und dem i-ten Zugriffskriterium (CA1) einen Entschlüsselungsschlüssel (CW') in verschlüsselter Form enthält, Schlüssel der Ordnung i genannt, der sich von dem Entschlüsselungsschlüssel (CW) unterscheidet, der in der Berechtigungsprüfungsmitteilung der Ordnung N enthalten ist.

3. Verfahren nach Anspruch 2, bei dem das Verfahren im Fall eines positiven Tests des i-ten Zugriffskriteriums die Schritte enthält, die darin bestehen, auf den Entschlüsselungsschlüssel der Ordnung i (CW') zuzugreifen und den audiovisuellen Inhalt mit Hilfe des Entschlüsselungsschlüssels zu entschlüsseln.

4. Verfahren nach Anspruch 2, bei dem das Verfahren die folgenden Schritte enthält:
im Fall eines positiven Tests für den Index i, Zugriff auf den Entschlüsselungsschlüssel der Ordnung i und Entschlüsseln mit Hilfe des Entschlüsselungsschlüssels der Ordnung i eines zusätzlichen audiovisuellen Inhalts, der sich vom geschützten audiovisuellen Inhalt unterscheidet, und
im Fall eines positiven Tests für den Index N, Entschlüsseln des geschützten audiovisuellen Inhalts mit Hilfe des Entschlüsselungsschlüssels des geschützten audiovisuellen Inhalts.

5. Verfahren nach Anspruch 1, bei dem mindestens eine Berechtigungsprüfungsmitteilung der Ordnung i<N (ECM1) außer dem i-ten Zugriffskriterium (CA1) eine erste und eine zweite Berechtigungsprüfungsmitteilung (ECM2_A, ECM2_B) der Ordnung i+1 enthält.

6. System (250) zur Kontrolle des Zugriffs auf einen geschützten audiovisuellen Inhalt, das enthält Empfangseinrichtungen, die eingerichtet sind, um eine Mitteilung zu empfangen, die eine Vielzahl von mindestens N Berechtigungsprüfungsmitteilungen (ECM1, ECM2) enthält, die ineinander angeordnet und von der jeweiligen Ordnung i mit 1 ≤ i ≤ N sind, wobei die Berechtigungsprüfungsmitteilung der Ordnung i<N ein i-tes Zugriffskriterium (CA_Entrance) und die Berechtigungsprüfungsmitteilung der Ordnung i+1 in verschlüsselter Form enthält, wobei die Berechtigungsprüfungsmitteilung der Ordnung N ein N-tes Zugriffskriterium (CA_Inside) und einen selbst verschlüsselten Entschlüsselungsschlüssel (C W) des geschützten audiovisuellen Inhalts enthält,
Sicherheitseinrichtungen (251, 252), die eingerichtet sind, um für eine Berechtigungsprüfungsmitteilung der Ordnung i, wobei i anfangs den Wert 1 annimmt, einen Test durchzuführen, um zu überprüfen, ob einer Ausrüstung zugeordnete Rechte das i-te Zugriffskriterium erfüllen,
Entschlüsselungseinrichtungen (251), die eingerichtet sind, um im Fall eines positiven Tests für den Index i die Berechtigungsprüfungsmitteilung der Ordnung i+1 zu entschlüsseln und den Sicherheitseinrichtungen eine Wiederholung des Tests für den Index i+1 zu befehlen,
Einrichtungen (252), um im Fall eines positiven Tests für den Index N auf den Entschlüsselungsschlüssel (CW) des geschützten audiovisuellen Inhalts zuzugreifen.

7. Computerprogramm, das Anweisungen zur Durchführung des Verfahrens nach Anspruch 1 aufweist, wenn die Anweisungen von einem Prozessor ausgeführt werden.

8. Kontrollmitteilung des Zugriffs auf einen geschützten audiovisuellen Inhalt, die eine Vielzahl von mindestens N Berechtigungsprüfungsmitteilungen (ECM1, ECM2) enthält, die ineinander angeordnet und von jeweiligen Ordnungen i mit 1 ≤ i ≤ N sind, wobei die Berechtigungsprüfungsmitteilung der Ordnung i<N ein i-tes Zugriffskriterium (CA1) und die Berechtigungsprüfungsmitteilung der Ordnung i+1 in verschlüsselter Form (K₁(ECM2)) enthält, wobei die Berechtigungsprüfungsmitteilung der Ordnung N ein N-tes Zugriffskriterium (CA2) und einen selbst verschlüsselten Entschlüsselungsschlüssel (CW) des geschützten audiovisuellen Inhalts enthält.

9. Verfahren zur Verwaltung der Kontrolle des Zugriffs auf einen geschützten audiovisuellen Inhalt, das die Schritte enthält, die darin bestehen
mindestens eine Berechtigungsprüfungsmitteilung der Ordnung N>1 zu empfangen, wobei die Mitteilung (ECM2) mindestens ein N-tes Zugriffskriterium (CA2) und einen Entschlüsselungsschlüssel des geschützten audiovisuellen Inhalts (CW) enthält,
wobei der Schlüssel in verschlüsselter Form vorliegt,
für jeden Index j einer Folge von Indices j mit j von 1 bis N-1 variierend, eine Berechtigungsprüfungsmitteilung der Ordnung N-j (ECM1) zu generieren, die mindestens eine Berechtigungsprüfungsmitteilung der Ordnung N-j+1 (ECM2) in verschlüsselter Form und mindestens ein N-j-tes Zugriffskriterium (CA1) enthält.

10. Vorrichtung (103) zur Verwaltung der Kontrolle des Zugriffs auf einen geschützten audiovisuellen Inhalt, die enthält
Einrichtungen zum Empfang mindestens einer Berechtigungsprüfungsmitteilung der Ordnung N>1 (ECM2), die mindestens ein N-tes Zugriffskriterium (CA_Inside) und einen Entschlüsselungsschlüssel des geschützten audiovisuellen Inhalts (CW) enthält, wobei der Schlüssel in verschlüsselter Form vorliegt, und
Einrichtungen zur Generierung einer Berechtigungsprüfungsmitteilung der Ordnung N-j (ECM1) für jeden Index j einer Folge von Indices j mit j von 1 bis N-1 variierend, wobei die Mitteilung der Ordnung N-j mindestens eine Berechtigungsprüfungsmitteilung der Ordnung N-j+1 (ECM2) in verschlüsselter Form und mindestens ein N-j-tes Zugriffskriterium (CA1) enthält.

11. Computerprogramm, das Anweisungen zur Durchführung des Verfahrens nach Anspruch 9 aufweist, wenn die Anweisungen von einem Prozessor ausgeführt werden.
